# EUROPÄISCHE PATENTSCHRIFT

(11) **EP 0 616 832 B1**
(45) Veröffentlichungstag und Bekanntmachung des Hinweises auf die Patenterteilung: **11.09.1996**
(21) Anmeldenummer: 94104656.7
(22) Anmeldetag: 24.03.1994
(51) Int. Cl.: B01D 39/18

(54) **Filtermaterial**
Filter material
Matériaux de filtre

(30) Priorität: 26.03.1993 DE 4309845
(43) Veröffentlichungstag der Anmeldung: 28.09.1994
(73) Patentinhaber: SEITZ-FILTER-WERKE Gmbh und Co., D-55543 Bad Kreuznach (DE)
(72) Erfinder: Beck, Dieter, Prof. Dr., D-55545 Bad Kreuznach (DE); Breitbach, Peter P., D-55559 Bretzenheim (DE); Leibnitz, Rüdiger, D-55545 Bad Kreuznach (DE); Ritter, Gerd, D-55452 Guldental (DE)
(74) Vertreter: Fuchs, Luderschmidt & Partner Patentanwälte

(56) Entgegenhaltungen:
- WO-A-92/07140
- DE-A- 4 119 288
- GB-A- 2 230 278
- DATABASE WPI Week 8211, Derwent Publications Ltd., London, GB; AN 82-21576E & SU-A-833 283 (I.M.LEICHKIS) 30. Mai 1981
- DATABASE WPI Week 8544, Derwent Publications Ltd., London, GB; AN 85-274333 & RO-A-86 546 (INTR PALAS CELULOZ) 30. März 1985
- DATABASE WPI Week 9416, Derwent Publications Ltd., London, GB; AN 94-132655 & JP-A-6 082 435 (KANEBO) 22. März 1994

## Beschreibung

Die Erfindung betrifft ein Filtermaterial, insbesondere für Tiefenfilterschichten und Anschwemmfilter, mit Zellstoff als Matrixmaterial, in das Zelluloseacetatfasern sowie Zusätze eingelagert sind. Die Erfindung bezieht sich auch auf die Herstellung solchen Filtermaterials.

Nach der Ablösung von Asbestfasern in Filterschichten für die Tiefenfiltration erlangten als Substitute Kieselgure und Perlite eine große Bedeutung beim Einsatz in Tiefenfilterschichten. Als Gerüstmaterial wurden weiterhin Zellstoffasern verwendet. In Folge des Aufbaus der Kieselgure aus anorganischen Materialien ergeben sich eine Reihe von Nachteilen, wie mangelnde biologische Abbaubarkeit und Gesundheitsgefährdung aufgrund von Staubbildung. Außerdem weisen unbehandelte Kieselgure eine relativ hohe Auswaschbarkeit von Ionen auf.

Glasfasern, die bezüglich der Abmessung bis zu Durchmessern von 0,1 µm gefertigt werden können, scheiden durch ihre biologische Nichtabbaubarkeit und kanzerogene Wirkung aus.

Polypropylen-, Polyamid- und Polyesterfasern sind noch nicht in den gewünschten Faserfeinheiten verfügbar oder können nicht hinreichend vereinzelt werden, so daß sie nicht als filtrationsaktive Substanz, d.h. als Kieselgurersatz, geeignet sind.

Zur Herstellung von Tiefenfiltermaterial bestehend aus Zellulose und Zellulosederivaten ist man daher dazu übergegangen, Zelluloseacetatfasern einzusetzen, die nach der Fällung bezüglich extrahierbarer Bestandteile im Vergleich zu Kieselguren sehr rein vorliegen.

In den US-Patenten 3,842,007 und 3,961,007 wird der Einsatz reiner Zelluloseacetatschichten für die Tiefenfiltration beschrieben. Aus der US 3,842,007 ist ein Filtermaterial bekannt, das Zelluloseacetatfasern in Stab- und Flockenform aufweist, wobei die spezifischen Oberflächen bei 35 bis 55 m²/g liegen. Der Nachteil dieses Filtermaterials liegt darin, daß es nach der Herstellung in feuchtem Zustand gehalten werden muß, was die Aufbewahrung in speziellen Behältern erforderlich macht.

Gemäß der US 3,961,007, die eine Weiterentwicklung des in der US 3,842,007 beschriebenen Filtermaterials betrifft, können auch noch andere Materialien, wie Kieselgur oder Zellulosefasern, den Zelluloseacetatfasern zugegeben werden, wobei diese Zugabe vor der Fällung erfolgt.

Diese Einschränkungen sind für Filterschichten nicht akzeptabel. Einerseits können Schichten nur in Ausnahmefällen im feuchten Zustand verkauft werden, andererseits sind reine Zelluloseacetatschichten zu teuer.

Die US 4,192,838 und US 4,274,914 beschreiben die Herstellung sehr dünner Filterschichten für Aerosole, wobei die Filter vorwiegend als Zigarettenfilter eingesetzt werden. Diese Filterschichten bestehen ausschließlich aus Zelluloseesterfasern. Tiefenfilter für Hydrosole müssen gegenüber Zigarettenfiltern bedeutend längere Standzeiten aufweisen und sind anderen Partikelkonzentrationen und -größen ausgesetzt, so daß der Aufbau zur Gewährleistung eines hohen Speichervermögens bei vorgegebenen Abscheidegraden und Druckverlusten von den in den patenten angegebenen Filterpapieren stark abweichen muß.

Die US 5,114,537 behandelt die Herstellung und Zusammensetzung von trockenen Filterschichten, die in Standardfilterpressen und Tiefenfilterkerzen genutzt werden können. Die Schichten setzen sich aus 2 bis 30 Gew.-% Zelluloseacetatfasern und 98 bis 70 Gew.-% Zellstoffasern, die bevorzugt gemahlen wurden, und einem kationischen Naßfestmittel zusammen. Durch unterschiedliche Mahlungszeiten, ohne Angabe von Mahlgraden und Mischungsverhältnissen wurden die Abscheidegrade und Druckverluste variiert. Die bekannten Zelluloseacetatfasern sind außerdem relativ dünn, während der restliche Zellstoff relativ dick ist. Dadurch und durch die Vernetzung der Zelluloseacetatfasern ist es nicht möglich, eine homogene Mischung der Materialien zu erzielen.

Obwohl der Anspruch des Ersatzes von Zellstoff/Asbest-Schichten in der US 5,114,537 erhoben wird, liegen die angegebenen Werte für erreichte Abscheidegrade weit unter denen marktüblicher Entkeimungsfilter. So wurden für Partikel mit Größen zwischen 1 bis 3 µm ein β-Wert von 28,6 erreicht. Bei Partikeln zwischen 0,2 und 0,45 µm lag der β-Wert bei 5. Für Entkeimungsfilter sollte der β-Wert dagegen für 0,3 µm-Partikel 5000 betragen.

Es wird deutlich, daß zur Erreichung marktüblicher Abscheidegrade die Klärwirkung wesentlich gesteigert werden muß, ohne die Druckverluste zu erhöhen.

In der DE-A- 40 10 526 wird daher ein Filtermaterial beschrieben, das ein Grundgerüst aus Kunststoff- und/oder Naturfasern aufweist, in das inerte Partikel eingelagert sind. Als Kunststoffasern werden Zelluloseacetatfasern erwähnt. Bezüglich der inerten Partikel werden Agglomeratteilchen, vorzugsweise Fällungskieselsäure genannt, die Partikelgrößen bis zu 100 µm aufweisen können.

Fällungskieselsäure besteht ebenso wie Kieselgur aus anorganischem Material. Somit ergeben sich ähnlich wie beim Kieselgureinsatz Probleme bezüglich einer, wenn auch aufgrund der anderen Morphologie etwas geringeren, gesundheitsschädigenden Wirkung und bei der Entsorgung gebrauchter Schichten.

Aus der DE 41 19 288 A1 ist ein Verfahren zur Schichtenfiltration bekannt, bei dem anstelle der üblichen filtrationsaktiven mineralischen Komponenten Kieselgur und Perlite als Filterhilfsmittel inerte, praktisch keine Metallionen abgebende Filterhilfsmittel, wie feines, hochdisperses Polymergranulat, mikronisierte, hochreine Zellstoffe oder Mischungen dieser Stoffe verwendet werden.

Unter mikronisierter Zellulose, die auch als mikrofeine Zellulose bezeichnet wird, wird ein Material verstanden, das aus trocken gemahlenen Zellstoffen, insbesonder Laubholzzellstoffen besteht, die Faserlängen zwischen 10...300 µm, insbesondere zwischen 10...200 µm aufweisen.

Bezüglich der Faserdicke wird ein mittlerer Durchmesser von 5...30 µm als zweckmäßig angesehen, wobei auch Faserdicken und Faserdurchmesser von 15 µm genannt werden.

Mit den o.g. Abmessungen ist ein Ersatz von Kieselguren nicht gegeben. Somit sind auch keine Kläreffekte im Entkeimungsbereich möglich. Um diese Kläreffekte zu erreichen, werden entsprechend der DE 41 19 288 A1 synthetische Polymergranulate, insbesondere Harnstoff-Formaldehyd-Kondensationsprodukte, mit Partikelgrößen von 0,1...3,0 µm und einer spezifischen Oberfläche von 20 m²/g eingesetzt. Gehalte an freiem Formaldehyd, die auch bei auskondensierten Produkten nicht vollständig vemeidbar sind, können in vielen Bereichen der pharmazeutischen und Lebensmittelindustrie nicht toleriert werden. Außerdem wird mit diesem Material nicht der für die Entsorgung wichtige Anspruch der Materialhomogenität erfüllt.

Aufgabe der Erfindung ist daher ein Filtermaterial, das ausschließlich aus Zellstoffen und Zellstoffderivaten besteht, keine gesundheitsgefährdenden oder umweltschädlichen Komponenten sowie mindestens ebenso hohe Abscheidegrade wie die asbestfreien Tiefenfilterschichten nach dem Stand der Technik aufweist und das sehr geringe extrahierbare Bestandteile aufweist.

Diese Aufgabe wird durch die Merkmale des Anspruchs 1 gelöst. Gegenstand des Herstellungsverfahrens ist der Patentanspruch 21.

Die Gründe für die niedrigen, bisher erreichten Abscheidegrade mit Schichten aus Zelluloseacetatfasern sind in deren Struktur zu suchen. Während Kieselgure disperse Materialien mit Partikelgrößen teilweise bis in den Submikrometerbereich sind, bilden Zelluloseacetatfasern Fasernetzwerke, deren Agglomeratgröße von der Aufbereitung abhängig ist. Kieselgure sind durch ihren dispersen Charakter in der Lage, sich während der Schichtbildung, die als Kuchenfiltration anzusehen ist, in der Schicht zu bewegen und üben somit eine homogenisierende Wirkung aus. Mit relativ hohen Mengen an Kieselgur, die bis zu 2/3 der Gesamtmasse der Schichten betragen können, wurde die Homogenität der Schicht sichergestellt.

Die Zellstoffasern, die lediglich eine Matrix bilden und für die Festigkeit der Schicht sorgen, die durch kationische Naßfestmittel unterstützt werden kann, besitzen jedoch kein inneres Porensystem und haben somit keinen Anteil an der Abscheidewirkung. Die Abscheidewirkung wird durch die Vernetzung der Zelluloseacetatfasern erreicht, wobei die durch die Zelluloseacetatfasern gebildeten Agglomerate jedoch im allgemeinen zu groß sind, so daß sie beim Schichtaufbau nicht frei beweglich sind und somit keine homogenisierende Wirkung ausüben können. Bisherige Filterschichten sind darum durch Inhomogenitäten gekennzeichnet, die auch durch eine intensive Durchmischung im Herstellungsprozeß nur teilweise verringert werden können. Während der Filtration strömt der Hauptteil der Suspension durch die Gebiete, in denen sich bevorzugt Zellstoffasern befinden, die jedoch eine wesentlich geringere Abscheidewirkung besitzen. Das Abscheidepotential der Zelluloseacetatfasern wird somit nur unvollständig genutzt.

Erfindungsgemäß können diese Probleme durch einen bis zu 70 Gew.-%-igen Anteil an mikrokristalliner Zellulose und einen bis zu 50 Gew.-%-igen Anteil an mikrofeiner Zellulose behoben werden, wobei auch die Möglichkeit vorgesehen ist, auf die mikrofeine Zellulose gänzlich zu verzichten.

Zellulose besteht i.d.R. aus amorphen und kristallinen Bestandteilen. Bei der Herstellung der mikrokristallinen Zellulose werden amorphe Bestandteile durch eine Säurehydrolyse unter Wärmeeinwirkung entfernt, so daß im Endprodukt isolierte, wenngleich modifizierte Zellulosekristallite vorliegen. Der Kristallinitätsindex ändert sich dabei von 0,5 bis 0,6 der Ausgangszellulose auf ca. 0,8. Der Kristallinitätsindex wird röntgenographisch ermittelt, indem das Verhältnis der Flächen der scharfen Kristallitinterferenzen zur Gesamtfläche bestimmt wird. Anschließend wird über eine Mahlung und Sichtung der gewünschte Dispersitätszustand eingestellt. Entsprechend dieser Mahlung/Sichtung werden unterschiedliche Fraktionen hergestellt, die bezüglich der Partikelgrößen unterschieden werden können. Außerdem wird bei diesem Aufschluß die Kettenlänge der Zellulosemoleküle reduziert.

Unter mikrokristalliner Zellulose, wie sie im vorliegenden Filtermaterial eingesetzt wird, versteht man Fraktionen mit Partikeldurchmessern unter 50 µm, wobei die Partikel vorzugsweise ein Längen-/Durchmesserverhältnis <3:1 aufweisen.

Im Unterschied zur mikrokristallinen Zellulose wird mikrofeine Zellulose nur über Mahl- und Sichtprozesse hergestellt. Das bedeutet, daß der Kristalllnitätsindex gegenüber dem Ausgangsmaterial nahezu unverändert ist (also ebenfalls 0,5 bis 0,6). Durch die fehlende chemische Behandlung ist die Kettenlänge der Zellulosemoleküle größer als bei mikrokristalliner Zellulose.

Die erfindungsgemäß eingesetzte mikrofeine Zellulose enthält Zelluloseanteile mit Fasern, deren Länge bei bis zu 1 mm, vorzugsweise jedoch unter 100 µm liegt. Nachfolgend werden die mikrokristalline und die mikrofeine Zellulose jeweils über die Angaben der Partikelgrößen und Faserlängen charakterisiert.

Wenn gemäß einer bevorzugten Ausführungsform sowohl mikrokristalline Zellulosen als auch mikrofeine Zellulosen in der Filterschicht enthalten sind, sind mikrokristalline Zellulosen mit Paitikelgrößen von 10 bis 50 µm und mikrofeine Zellulose mit Faserlängen >50 µm bevorzugt, wobei die Anteile zusammen bis 50 Gew.-% betragen können. Die Einzelanteile liegen vorzugsweise bei 10 bis 40 Gew.-% für die mikrokristalline Zellulose bzw. bei 10 bis 40 Gew.-% bei der mikrofeinen Zellulose.

Die mikrokristalline Zellulose besitzt dispersen Charakter, um somit - ähnlich wie Kieselgur - in der Schicht beweglich zu sein und dadurch eine homogenisierende Wirkung auszuüben. Die Partikelgrößen liegen vorzugsweise im Bereich von 20 bis 30 µm. Zu kleine Partikel verstopfen das Porensystem der Zelluloseacetatfasern, zu große Partikel können keine nennenswerte Homogenisierungswirkung ausüben, sondern bedingen teilweise selbst Inhomogenitäten.

Der Einsatz von mikrofeiner Zellulose bietet den Vorteil, daß das Filtermaterial, insbesondere als Tiefenfilterschicht, aufgelockert wird, so daß die Beweglichkeit der mikrokristallinen Zellulose im Matrixmaterial verbessert wird.

Die Zelluloseacetatfasern können einen Anteil von bis 50 Gew.-% aufweisen, wobei sich der Gehalt an Zelluloseacetatfasern nach der gewünschten Abscheidecharakteristik richtet. Die spezifische Oberfläche der Zelluloseacetatfasern liegt zwischen 5 und 50 m²/g, bevorzugt zwischen 5 und 30 m²/g. Derartige Zelluloseacetatfasern werden beispielsweise von der Hoechst Celanese Corp. unter dem Namen Fibret-Fasern angeboten, die aus Zellulosediacetat mit Faserdurchmessern von 0,5 bis 5 µm bestehen. Für die Filtrationswirkung ist es von Vorteil, wenn alle drei Komponenten, also die Zelluloseacetatfasern, die mikrokristalline und die mikrofeine Zellulose in homogener Verteilung in der Filterschicht vorliegen.

Als Matrixmaterial enthält die Filterschicht unterschiedlich aufgearbeitete Zellstoffe mit einem Anteil von 10 bis 75 Gew.-%, vorzugsweise 10 bis 40 Gew.-%. Unter unterschiedlich aufgearbeitetem Zellstoff werden ungemahlene oder gering gemahlene Zellstoffe sowie gemahlene Zellstoffe verstanden, die einen Mahlgrad von >40° SR, vorzugsweise >80° SR aufweisen. Während der Anteil der ungemahlenen oder gering gemahlenen Zellstoffe vorzugsweise bei 10 bis 40 Gew.-% liegt, kann der Anteil der gemahlenen Zellstoffe 0 bis 30 Gew.-% betragen. Die Zellstoffe können beispielsweise aus Laubholz, Nadelholz oder Linters hergestellt sein.

Vorzugsweise enthält die Filterschicht zusätzlich ein kationisches oder anionisches Naßfestmittel und/oder ein kationisches oder anionisches Harz zur Ladungseinstellung.

Gemäß einer weiteren bevorzugten Ausführungsform kann auf den Einsatz von Zelluloseacetatfasern gänzlich verzichtet werden, wenn zusätzlich mikrokristalline Zellulose mit Partikelgrößen unter 10 µm eingesetzt werden. Diese mikrokristalline Zellulose, deren Anteil bei 5 bis 50 Gew.-% liegt, wird zusammen mit mikrokristalliner Zellulose der Partikelgrößen von 10 bis 50 µm (10 - 40 Gew.-%) sowie ggf. der mikrofeinen Zellulose (10 - 40 Gew.-%) eingesetzt, wobei der Gesamtanteil der mikrofeinen und mikrokristallinen Zellulose 80 Gew.-% nicht übersteigt. In diesem Fall wird die Abscheidewirkung durch die mikrokristallinen Zellulose bestimmt. Der Vorteil gegenüber der ersten Ausführungsform besteht darin, daß die Preise der mikrokristallinen Zellulose unter denen der Zelluloseacetatfasern liegen und durch den dispersen Charakter der mikrokristallinen Zellulose die Wirksubstanz selbst eine homogenisierende Wirkung ausübt und somit umfangreiche Homogenisierungsschritte entfallen können.

Mit Tiefenfilterschichten aus dem erfindungsgemäßen Filtermaterial werden Kläreffekte bis einschließlich im Entkeimungsbereich erreicht, die mit bekannten Kieselgurschichten vergleichbar sind.

Neben einer Anwendung des Filtermaterials für Tiefenfilterschichten kommt auch eine Anwendung als Anschwemmaterial in Frage. Die Vorteile der Nutzung der Zellulosematerialien als Filterhilfsmittel liegen wie bei den Schichten in der geringen Ionenabgabe mit der Zusammensetzung aus auschließlich biologisch abbaubaren oder nahezu rückstandslos verbrennbaren Materialien. Durch den Einsatz der Celluloseacetatfasern oder der mikrokristallinen Zellulosen mit Partikelgrößen <10 µm ist ein Ersatz von Kieselguren möglich. Praxisversuche ergaben, daß Grob- und Mittelguren durch die erfindungsgemäßen Anschwemmaterialien ersetzt werden können. Bekannte Anschwemmaterialien aus Zellulose - wie z.B. in DE 41 19 288 beschrieben - eignen sich lediglich als Voranschwemmung oder als Stützmaterial für zusätzlich erforderliche Filterhilfsmittel, wie Kieselguren und/oder Perlite.

Das Herstellungsverfahren ist dadurch gekennzeichnet, daß zunächst die Zelluloseacetatfasern mit mikrofeinen Zellulosefasern und mikrokristalliner Zellulose oder die Zelluloseacetatfasern nur mit mikrokristalliner Zellulose im nassen Zustand vermischt werden. Anschließend werden die unterschiedlich aufgearbeiteten Zellstoffe zugemischt und die durch Vermischen gebildete Maische mittels eines an sich bekannten Verfilzungsverfahrens zu einem Vlies geformt, das anschließend getrocknet wird. Hierbei werden die Zellstoffe in zwei Fraktionen zugemischt. Die erste Fraktion der Zellstoffe wird aufgeschlagen und ungemahlen oder lediglich schwach vermahlen und wird zur Sicherung der Naßfestigkeit benötigt. Die zweite Fraktion wird nach dem Aufschlagen bei Stoffkonzentrationen >3 Gew.-%, bevorzugt >4 Gew.-%, bis zu Mahlgraden >40° SR, bevorzugt >80° SR, gemahlen. Die fibrillierende Mahlung sorgt für eine geringere Naßdichte der Schicht und somit für ein höheres Partikelaufnahmevermögen.

Durch diese Verfahrensschritte wird das Problem behoben, daß die Porenweite des Zelluloseacetatfasernetzwerkes bedeutend geringer ist als die der übrigen Komponenten, was zusammen mit dem geringen Anteil der Zelluloseacetatfasern in der Schicht von <50 Gew.-% zu deren mangelnden Durchströmung und somit ungenügenden Filtrationswirkungen führt.

Dadurch, daß die Zelluloseacetatfasern und die mikrokristalline bzw. mikrofeine Zellulose intensiv bei hohen Turbulenzen durchmischt werden, wird erreicht, daß die mikrokristallinen und die mikrofeinen Zellulosen oder nur die mikrokristalline Zellulose in das Netzwerk der Zelluloseacetatfasern eingearbeitet werden. Dadurch werden auch die Agglomerate der Zelluloseacetatfasern während der Filtration besser durchströmt.

Die Durchmischung kann durch eine leichte Mahlung, die insbesondere die gröbste Komponente betrifft, überlagert sein. Die anschließende Zugabe der Zellstoffe kann wegen des großen Anteils der feinteiligen Mischung, die 70 bis 80 Gew.-% am Tiefenfiltermaterial ausmacht, die erzielte Homogenität nicht stören. Der umgekehrte Vorgang ist nicht vorteilhaft, da das relativ grobe Zellstoffmaterial eher zu einer Verklumpung führen würde. Die Durchmischung der mikrokristallinen und mikrofeinen Zellulosen und Zelluloseacetatfasern mit den unterschiedlich aufbereiteten Zellstoffen muß zur Erreichung einer großen Homogenität ebenfalls sehr intensiv erfolgen.

Das Herstellungsverfahren ändert sich nicht, wenn auf die Zelluloseacetatfasern verzichtet wird.

Anstelle der Zelluloseacetatfasern wird zusätzlich mikrokristalline Zellulose mit Partikelgrößen unter 10 µm mit der mikrokristallinen Zellulose der Partikelgröße >10 µm und ggf. mit der mikrofeinen Zellulose vermischt.

Zur Herstellung des trockenen Anschwemmaterials aus dem Filtermaterial sind grundsätzlich zwei Wege möglich.

In einer ersten Ausführungsform werden Schichten nach dem oben beschriebenen Verfahren hergestellt. Diese Schichten werden einer nachfolgenden Vermahlung zugeführt. Diese Vermahlung kann bevorzugt über Schneid-, Stift- oder Zahnscheibenmühlen erfolgen.

Bei einer zweiten Ausführungsform kann der Prozeß einer nachfolgenden Vermahlung eliminiert werden. Dabei wird keine Schicht gebildet, die nachfolgend über Bandtrockner getrocknet wird, sondern das disperse Zellulosematerial wird nach der Aufbereitung zur Maische nach einer Vorentwässerung sofort einer Trocknung zugeführt. Bei dieser Vorgehensweise bleibt der in der Suspension vorliegende Dispersitätszustand erhalten, so daß keine weitere Zerkleinerung im trockenen Zustand erfolgen muß. Für die Trocknung entsprechend letzterer Ausführungsform erweist sich eine Trocknung in der fluiden Phase, wie Sprüh-, Wirbelschicht- oder Stromtrocknung, als vorteilhaft. Bevorzugt sollte das Einbringen des Materials in den Trocknungsraum durch Versprühen über Düsen oder Drehteller erfolgen.

Grundsätzlich ist auch eine trockene Vermischung der Einzelmaterialien oder die Grobmischung am Einsatzort in der Suspension möglich, wobei jedoch in beiden Fällen keine so intensive Vermischung (überlagert von einer teilweisen Zerkleinerung) wie nach o.g. Vorgehensweise vorliegt.

### Beispiele

Die Aufarbeitung des Filtermaterials erfolgte erfindungsgemäß, indem zunächst die Zelluloseacetatfasern gemeinsam mit der mikrokristallinen und mikrofeinen Zellulose intensiv durchmischt und vermahlen wurden. Danach erfolgte die Mischung mit den unterschiedlich aufgearbeiteten Zellstoffen.

Die mikrokristalline Zellulose wies einen Modalwert der Partikelgrößenverteilung von 29 µm auf. Die Faserlängen der mikrofeinen Zellulose lagen zwischen 50 und 100 µm. Außerdem gelangten Nadelholzzellstoffe zum Einsatz.

Die nachfolgend in den Tabellen 1 bis 3 erwähnten Schichten unterscheiden sich in der Zusammensetzung.

### Schicht 1:

Diese Schicht besteht nur aus Zelluloseacetatfasern und Zellstoff und stellt somit eine Filterschicht nach dem Stand der Technik (US-PS 5,114,537) dar.

### Schicht 2:

Die Zumischung von 10 Gew.-% mikrokristalliner Zellulose zeigt eine deutliche Verbesserung sowohl der Durchlässigkeit als auch der Abscheidewirkung.

### Schicht 3:

Eine Erhöhung des Anteils mikrokristalliner Zellulose auf 20 Gew.-% ergibt nochmals eine Verbesserung von Durchlässigkeit und Abscheidewirkung.

### Schicht 4:

Mit der Zumischung mikrofeiner Zellulose kann die Durchlässigkeit der Schicht stark erhöht werden, ohne daß ein signifikanter Abfall des Abscheidegrades eintritt.

### Schicht 5:

Durch die unterschiedliche Aufarbeitung der Zellstoffe kann der Abscheidegrad weiter verbessert werden bei einem vertretbaren Abfall der Durchlässigkeit. Die Ergebnisse des mikrobiologischen Tests (Tabelle 3) weisen im Vergleich zur Schicht 1 aus, daß die Entkeimungswirkung signifikant gesteigert werden konnte und dadurch der angestrebte Ersatz von Kieselgurschichten im Entkeimungsbereich ermöglicht wird.

### Schicht 6 und 7:

Diese Schichten weisen keine Zelluloseacetatfasern auf. Stattdessen wird mikrokristalline Zellulose mit Partikelgrößen unter 10 µm eingesetzt. Die Unterscheidung der mikrokristallinen Zellulosen C und D bezieht sich auf die Partikelgrößen. Die mikrokristalline Zellulose C stellt eine Zellulose dar, deren Partikelgrößen im Bereich <10 µm liegen. Beim Typ D liegen die Partikelgrößen bevorzugt im Bereich von 10 bis 50 µm.

**Tabelle 1a**

| (Rezepturen) | | | | | |
|---|---|---|---|---|---|
| Schicht Nr. | Zellulose acetatfasern Gew.-% | mikrokrist. Zellu. Gew.-% | mikrofeine Zellu. Gew.-% | ungemahl. Zellstoff Gew.-% | gemahlener Zellstoff Gew.-% |
| 1 | 27,5 | 0 | 0 | 0 | 72,5 (30°SR) |
| 2 | 27,5 | 10 | 0 | 0 | 62,5 (30°SR) |
| 3 | 27,5 | 20 | 0 | 0 | 52,5 (30°SR) |
| 4 | 27,5 | 20 | 20 | 0 | 32,5 (30°SR) |
| 5 | 30 | 20 | 20 | 15 | 15 (85°SR) |

**Tabelle 1b**

| Schicht Nr. | mikrokristalline Zellulose | | mikrofeine Zellu. Gew.-% | ungem. Zellstoff Gew.-% | gemahlener Zellstoff Gew.-% |
|---|---|---|---|---|---|
| | Typ C Gew.-% | Typ D Gew.-% | | | |
| 6 | 30 | 20 | 20 | 15 | 15 (85°SR) |
| 7 | 40 | 15 | 15 | 15 | 15 (85°SR) |

**Tabelle 2**

| Erreichte Durchlässigkeit und Klärwirkung | | | |
|---|---|---|---|
| Schicht Nr. | Durchlässigkeit für Wasser bei 1 bar in l/m²/min | Trübung des Filtr. in TE/F | Abscheidegrad in % |
| 1 | 18 | 0,31 | 85,2 |
| 2 | 22 | 0,18 | 91,4 |
| 3 | 39 | 0,11 | 94,8 |
| 4 | 113 | 0,12 | 94,3 |
| 5 | 85 | 0,09 | 95,7 |
| 6 | 78 | 0,13 | 93,8 |
| 7 | 69 | 0,12 | 94,3 |

Die Unterschiede im Abscheidegrad erscheinen nicht groß. In der Klärfiltration kann eine Steigerung des Abscheidegrades um 10% jedoch große Auswirkungen auf das Prozeßergebnis besitzen. Infolge der Definition des Abscheidegrades als Verhältnis aus zurückgehaltenen Partikeln zu den in der Ausgangssuspension enthaltenen Partikeln werden die erzielten Änderungen bei Abscheidegraden über 80% zahlenmäßig nur gering wiedergegeben. So bedeutet eine Erhöhung des Abscheidegrades um 10% für o.g. Beispiele eine Partikelreduzierung im Filtrat auf weniger als 1/3.

Deutlich wird dieses Verhalten bei der Verwendung monodisperser Partikel (mikrobiologische Untersuchungen). Ein Unterschied der LRV-Werte um 1 bedeutet eine Reduzierung der Partikel im Filtrat um eine Zehnerpotenz. Diese Angaben untersteichen die Bedeutung der vorliegenen Erfindung.

**Tabelle 3**

| Mikrobiologische Rückhaltung | | |
|---|---|---|
| Schicht Nr. | LRV-Wert für | |
| | E. Coli | Pseud. dim. |
| 1 | 3,20 | 0 |
| 2 | 5,8 | 2,0 |
| 3 | 6,8 | 3,9 |
| 4 | 7,2 | 3,7 |
| 5 | 9,5 | 6,2 |
| 6 | 6,2 | 3,3 |
| 7 | 6,8 | 3,5 |

Mit dem Einsatz mikrokristalliner Zellulose anstatt Zelluloseacetatfasern sind zwar nicht die Ergebnisse der Schichten, die Zelluloseacetatfasern enthalten, erreichbar, jedoch ist die deutliche Steigerung der Abscheidung gegenüber der Ausgangsschicht erkennbar.

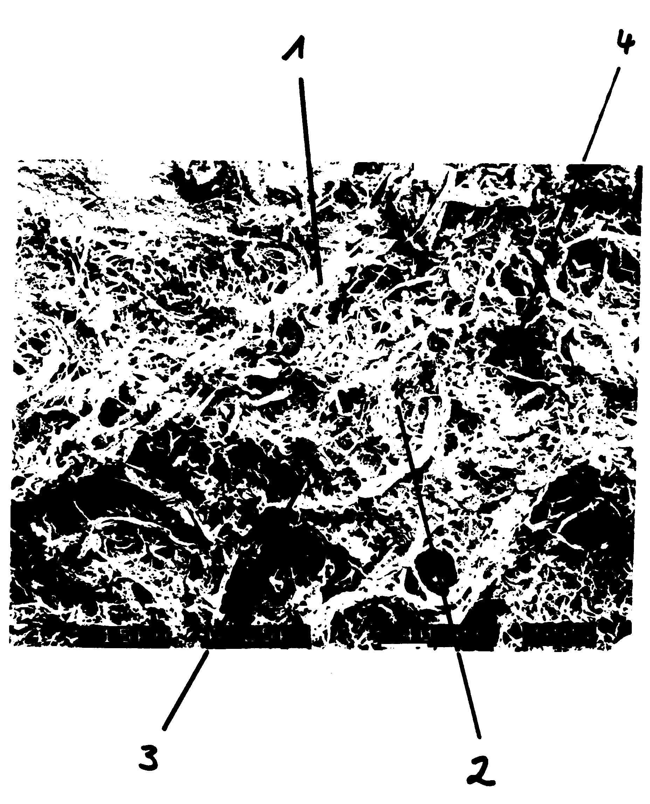

In der Figur ist eine elektronenmikroskopische Aufnahme einer Filterschicht gemäß Beispiel Schicht Nr. 5 dargestellt. Die Vergrößerung ist 250-fach.

Es ist die homogene Verteilung der Bestandteile deutlich erkennbar. Oben links ist eine Zellstoff-Gerüstfaser 1 zu sehen, die in die Zelluloseacetatfasern 2 homogen eingebettet ist. Bruchstücke mikrokristalliner Zellulose 3 sind in die Zelluloseacetatfasern sowie in die Zellstoffasern 1 eingelagert. Die mikrofeine Zellulose ist mit dem Bezugszeichen 4 gekennzeichnet.

## Patentansprüche

1. Filtermaterial, insbesondere für Tiefenfilterschichten und für Anschwemmfilter, mit Zellstoff (1) als Matrixmaterial, in das Zelluloseacetatfasern (2) sowie Zusätze eingelagert sind,
dadurch gekennzeichnet,
daß die Filterschicht als Zusätze mikrokristalline Zellulose (3) oder mikrokristalline Zellulose (3) und mikrofeine Zellulose (4) aufweist, wobei der Anteil der mikrokristallinen Zellulose bis zu 70 Gew.-% und der Anteil der mikrofeinen Zellulose bis zu 50 Gew.-% des Filtermaterials beträgt.

2. Filtermaterial nach Anspruch 1, dadurch gekennzeichnet, daß der Anteil der mikrokristallinen Zellulose (3) 10 bis 40 Gew.-% beträgt.

3. Filtermaterial nach Anspruch 1 oder 2, dadurch gekennzeichnet, daß die Partikelgrößen der mikrokristallinen Zellulose (3) im Bereich von 10 bis 50 µm liegen.

4. Filtermaterial nach Anspruch 3, dadurch gekennzeichnet, daß die Partikelgrößen der mikrokristallinen Zellulose (3) im Bereich von 20 bis 30 µm liegen.

5. Filtermaterial nach einem der Ansprüche 1 bis 4, dadurch gekennzeichnet, daß die mikrokristalline Zellulose (3) ein Längen/Durchmesserverhältnis <3 aufweist.

6. Filtermaterial nach einem der Ansprüche 1 bis 5, dadurch gekennzeichnet, daß die mikrofeine Zellulose (3) als zusätzliche Komponente zur mikrokristallinen Zellulose Faserlängen >50 µm aufweist.

7. Filtermaterial nach Anspruch 6, dadurch gekennnzeichnet, daß der Anteil der mikrofeinen Zellulose (4) bei 10 bis 40 Gew.-% liegt.

8. Filtermaterial nach einem der Ansprüche 1 bis 7, dadurch gekennzeichnet, daß das Filtermaterial die mikrokristalline Zellulose (3), die mikrofeine Zellulose (4) und die Zelluloseacetatfasern (2) in homogener Verteilung enthält.

9. Filtermaterial nach einem der Ansprüche 1 bis 8, dadurch gekennzeichnet, daß der Anteil von Zelluloseacetatfasern (2) bei 5 bis 50 Gew.-% liegt.

10. Filtermaterial nach einem der Ansprüche 1 bis 9, dadurch gekennzeichnet, daß die mikrokristalline und die mikrofeine Zellulose (3, 4) gemeinsam einen Anteil von 50 Gew.-% nicht übersteigen.

11. Filtermaterial nach einem der Ansprüche 1 bis 10, dadurch gekennzeichnet, daß das Filtermaterial anstelle der Zelluloseacetatfasern (2) mikrokristalline Zellulose (3) mit Partikelgrößen <10 µm aufweist.

12. Filtermaterial nach Anspruch 11, dadurch gekennzeichnet, daß der Anteil der mikrokristallinen Zellulose (3) mit Partikelgrößen <10 µm 5 bis 50 Gew.-% beträgt, wobei der Gesamtanteil der mikrokristallinen und der mikrofeinen Zellulose 80 Gew.-% nicht übersteigt.

13. Filtermaterial nach einem der Ansprüche 1 bis 12, dadurch gekennzeichnet, daß die Zellstoffe (1) unterschiedlich aufgearbeitet sind und daß der Anteil der Zellstoffe (1) 10 bis 75 Gew.-% beträgt.

14. Filtermaterial nach einem der Ansprüche 1 bis 13, dadurch gekennzeichnet, daß die Zellstoffe (1) sowohl als ungemahlene oder gering gemahlene Zellstoffe als auch als gemahlene Zellstoffe mit Mahlgraden >40° SR enthalten sind.

15. Filtermaterial nach Anspruch 14, dadurch gekennzeichnet, daß der Anteil der ungemahlenen oder gering gemahlenen Zellstoffe (1) 10 bis 40 Gew.-% und der Anteil der gemahlenen Zellstoffe 0 bis 30 Gew.-% beträgt.

16. Filtermaterial nach einem der Ansprüche 1 bis 15, dadurch gekennzeichnet, daß das Filtermaterial zusätzlich ein kationisches oder anionisches Naßfestmittel zur Ladungseinstellung der Fasern enthält.

17. Verfahren zur Herstellung von Filtermaterial nach einem der Ansprüche 1 bis 16, dadurch gekennzeichnet, daß zunächst Zelluloseacetatfasern mit mikrofeiner Zellulose und mikrokristalliner Zellulose oder Zelluloseacetatfasern nur mit mikrokristalliner Zellulose in nassem Zustand vermischt werden,
daß anschließend unterschiedlich aufgearbeitete Zellstoffe in zwei Fraktionen zugemischt werden, wovon die erste Fraktion aufgeschlagen und ungemahlen belassen oder lediglich schwach gemahlen wird und die zweite Fraktion nach dem Aufschlagen über Stoffkonzentrationen >3 Gew.-%, bevorzugt >4 Gew.-%, bis zu Mahlgraden >40° SR gemahlen wird, und
daß die durch Vermischen gebildete Maische mittels eines an sich bekannten Verfilzungsverfahrens zu einem Vlies geformt wird, das anschließend getrocknet wird.

18. Verfahren nach Anspruch 17, dadurch gekennzeichnet, daß die zweite Fraktion bis zu Mahlgraden >80° SR gemahlen wird.

19. Verfahren nach einem der Ansprüche 17 oder 18, dadurch gekennzeichnet, daß der Mischung kationische oder anionische Naßfestmittel zugesetzt werden.

20. Verfahren nach einem der Ansprüche 17 bis 19, dadurch gekennzeichnet, daß anstelle von Zelluloseacetaten mikrokristalline Zellulose mit Partikelgrößen unter 10 µm mit mikrokristalliner Zellulose der Partikelgröße > 10 µm und mit der mikrofeinen Zellulose vermischt werden.

21. Verfahren nach einem der Ansprüche 17 bis 20, dadurch gekennzeichnet, daß das getrocknete Vlies zur Herstellung von Anschwemmaterial vermahlen wird.

22. Verfahren nach einem der Ansprüche 17 bis 21, dadurch gekennzeichnet, daß die Maische nicht zu einem Vlies geformt wird, sondern sofort einer Trocknung zugeführt wird.

## Claims

1. A filter material, in particular for deep filter layers and for precoated filters, with cellulose (1) as the matrix material, in which cellulose acetate fibres (2) and additives are incoporated.
characterised by the fact that:
The filter layer features as additives microcrystalline cellulose (3) or microcrystalline cellulose (3) and microfine cellulose (4), in which context the proportion of the microcrystalline cellulose amounts to up to 70 percent by weight and the proportion of microfine cellulose up to 50 percent by weight.

2. A filter material according to Claim 1, characterised by the fact that the proportion of microcrystalline cellulose (3) amounts to 10 to 40 percent by weight.

3. A filter material according to Claims 1 or 2, characterised by the fact that the particle sizes of the microcrystalline cellulose (3) are in the range from 10 to 50 µm.

4. A filter material according to Claim 3, characterised by the fact that the particle sizes of the microcrystalline cellulose (3) are in the range from 20 to 30 µm.

5. A filter material according to Claims 1 to 4, characterised by the fact that the microcrystalline cellulose (3) features a length/diameter ratio of < 3.

6. A filter material according to Claims 1 to 5, characterised by the fact the microfine cellulose (3) features, as additional components to the microcrystalline cellulose, fibre lengths of > 50 µm/

7. A filter material according to Claim 6, characterised by the fact that the proportion of microfine cellulose (4) is between 10 and 40 percent by weight.

8. A filter material according to one of Claims 1 to 7, characterised by the fact that the filter material contains the microcrystalline cellulose (3), the microfine cellulose (4), and the cellulose acetate fibres (2) in a homogenous distribution.

9. A filter material according to one of Claims 1 to 9, characterised by the fact that the proportion of cellulose acetate fibres (2) is between 5 and 50 percent by weight.

10. A filter material according to one of Clams 1 to 9, characterised by the fact that the microcrystalline and microfine cellulose (3, 4) together do not exceed a proportion of 50 percent by weight.

11. A filter material according to one of Claims 1 to 10, characterised by the fact that the filter material features, instead of the cellulose acetate fibres (2), microcrystalline cellulose (3) with particle sizes < 10 µm.

12. A filter material according to Claim 11, characterised by the fact that the proportion of microcrystalline cellulose (3) with particle sizes < 10 µm amounts to between 5 and 50 percent by weight, in which context the overall proportion of microcrystalline and microfine cellulose does not exceed 80 percent by weight.

13. A filter material according to one of Claims 1 to 12, characterised by the fact that the cellulose (1) is of a different format, and that the proportion of the cellulose (1) amounts to 10 to 75 percent by weight.

14. A filter material according to one of Claims 1 to 13, characterised by the fact that the celluloses (1) are contained as non-milled or slightly-milled celluloses, as well as in the form of milled celluloses with degrees of milling of > 40° SR.

15. A filter material according to Claim 14, characterised by the fact that the proportion of non-milled or slightly-milled cellulose (1) amounts to 10 to 40 percent by weight, and the proportion of milled cellulose amounts to 0 to 30 percent by weight.

16. A filter material according to one of Claims 1 to 15, characterised by the fact that the filter material additionally contains a cationic or anionic wet-strength material for adjusting the fibre load.

17. A process for the manufacture of filter material according to one of Claims 1 to 16, characterised by the fact that, initially, cellulose acetate fibres with microfine cellulose and microcrystalline cellulose or cellulose acetate fibres are mixed in the wet state only with microcrystalline cellulose; and
that subsequently, celluloses of different formats are mixed in two fractions, of which the first fraction is left applied and non-milled, or is only slightly milled, and the second fraction is milled after application in the form of substance concentrations of > 3 percent by weight, and for preference > 4 percent by weight, up to degrees of milling of > 40° SR; and
that the mash formed by the mixing is formed into a non-woven flock by means of a known fleecing process, which is subsequently dried.

18. A process according to Claim 17, characterised by the fact that the second fraction is milled up to a degree of milling of > 80° SR.

19. A process according to one of Claims 17 or 18, characterised by the fact that cationic or anionic wet-strength materials are added to the mixture.

20. A process according to one of Claims 17 to 19, characterised by the fact that, instead of cellulose acetates, microcrystalline cellulose is mixed in, with particle sizes of less than 10 µm and with microcrystalline cellulose with particle sizes > 10 µm, and with the microfine cellulose.

21. A process according to one of Claims 17 to 20, characterised by the fact that the dried non-woven flock substance is milled to manufacture precoated filter material.

22. A process according to one of Claims 17 to 21, characterised by the fact that the mash is not formed into a flock material, but is conducted immediately to a drying process.

## Revendications

1. Matériau filtrant, plus particulièrement pour la filtration en profondeur et pour des précouches, avec cellulose du matériau filtrant comme matrice dans laquelle sont incorporées les fibres d'acétate de cellulose du matériau filtrant ainsi que des additifs,
caractérisé en ce
que la couche filtrante présente comme additifs la cellulose microcristalline (3) ou la cellulose microcristalline (3) et la cellulose microfine (4), le taux en cellulose microcristalline alalnt jusqu'à 70% en poids et le taux en cellulose microfine allant jusqu'à 50% en poids du matériau filtrant.

2. Matériau filtrant selon la revendication 1, caractérisé en ce que le taux en cellulose microcristalline (3) est de 10 à 40% en poids.

3. Matériau filtrant selon la revendication 1 ou 2, caractérisé en ce que la taille des particules de la cellulose microcristalline (3) est comprise entre 10 et 50 µm.

4. Matériau filtrant selon la revendication 3, caractérisé en ce que la taille des particules de la cellulose microcristalline (3) est comprise entre 20 et 30 µm.

5. Matériau filtrant selon l'une des revendications 1 à 4, caractérisé en ce que la cellulose microcristalline (3) présente un rapport de la longueur/diamètre < 3.

6. Matériau filtrant selon l'une des revendications 1 à 5, caractérisé en ce que la cellulose microfine (3), en tant que constituant supplémentaire à la cellulose microcristalline, présente des longueurs de fibres > 50 µm.

7. Matériau filtrant selon la revendication 6, caractérisé en ce que le taux en cellulose microfine (4) est compris entre 10 et 40% en poids.

8. Matériau filtrant selon l'une des revendications 1 à 7, caractérisé en ce que le matériau filtrant contient la cellulose microcristalline (3), la cellulose microfine (4) et les fibres d'acétate de cellulose (2) dans une distribution homogène.

9. Matériau filtrant selon l'une des revendications 1 à 8, caractérisé ce que le taux en fibres d'acétate de cellulose (2) est de 5 à 50% en poids.

10. Matériau filtrant selon l'une des revendications 1 à 9, caractérisé ce que la cellulose microcristalline et la cellulose microfine (3, 4), ensemble, ne dépassent pas le taux de 50% en poids.

11. Matériau filtrant selon l'une des revendications 1 à 10, caractérisé ce que le matériau filtrant, au lieu des fibres d'acétate de cellulose (2), présente de la cellulose microcristalline ayant une taille de particules < 10 µm.

12. Matériau filtrant selon la revendication 11, caractérisé ce que le taux en cellulose microcristalline (3) ayant une taille des particules < 10 µm est de 5 à 50% en poids, le taux total en cellulose microcristalline et en cellulose microfine n'étant pas supérieur à 80% en poids.

13. Matériau filtrant selon l'une des revendications 1 à 12, caractérisé ce que les celluloses (1) sont transformées de manière différente, et en ce que le taux en celluloses (1) est de 10 à 75% en poids.

14. Matériau filtrant selon l'une des revendications 1 à 13, caractérisé ce que les celluloses (1) sont contenues aussi bien non broyées que faiblement broyées, ainsi que comme celluloses broyées avec des degrés de broyage > 40° SR.

15. Matériau filtrant selon l'une des revendications 1 à 14, caractérisé ce que le taux en celluloses non broyées ou faiblement broyées (1) est de 10 à 40% en poids et le taux en celluloses broyées de 0 à 30% en poids.

16. Matériau filtrant selon l'une des revendications 1 à 15, caractérisé ce que le matériau filtrant contient de plus un agent de résistance à l'humidité cationique ou anionique pour le réglage de la charge des fibres.

17. Procédé pour la préparation de matériaux filtrants selon l'une des revendications 1 à 16, caractérisé en ce qu'on mélange d'abord les fibres d'acétate de cellulose avec la cellulose microfine et la cellulose microcristalline, ou les fibres d'acétate de cellulose seulement avec la cellulose microcristalline à l'état humide,
en ce qu'on ajoute ensuite par mélange, en deux fractions, les celluloses transformées de manière différente, dont la première fraction reste suspendue et non broyée ou seulement faiblement broyée, et la deuxième fraction après mise en suspension étant broyée, dans des concentrations en matière > 3% en poids de préférence > 4% en poids, jusqu'à un degré de broyage > 40° SR, et
en ce que le moût formé par mélange est façonné en une nappe à l'aide d'un procédé de feutrage connu, que l'on sèche ensuite.

18. Procédé selon la revendication 17, caractérisé en ce que la deuxième fraction est broyée jusqu'à un degré de broyage > 80° SR.

19. Procédé selon l'une des revendications 17 ou 18, caractérisé en ce qu'on ajoute au mélange des agents de résistance à l'humidité cationiques ou anioniques.

20. Procédé selon l'une des revendications 17 à 19, caractérisé en ce que, au lieu des acétates de cellulose, on mélange de la cellulose microcristalline ayant une taille de particules inférieure à 10 µm avec de la cellulose microcristalline ayant une taille de particules > 10 µm et avec de la cellulose microfine.

21. Procédé selon l'une des revendications 17 à 20, caractérisé en ce que la nappe séchée est broyée pour préparer des précouches.

22. Procédé selon l'une des revendications 17 à 21, caractérisé en ce qu'on n'utilise pas le moût pour former une nappe, mais on conduitdirectement au séchage.
